# EUROPEAN PATENT APPLICATION

(11) **EP 3 537 688 A1**
(43) Date of publication of application: **11.09.2019**
(21) Application number: 18183471.4
(22) Date of filing: 13.07.2018
(51) Int. Cl.: H04L 29/08, H04L 12/725

(54) **METHOD AND DEVICE FOR DETERMINING AN OPTIMIZED COMMUNICATION PATH**

(30) Priority: 06.03.2018 EP 18160250
(71) Applicant: Siemens Aktiengesellschaft, 80333 München (DE)
(72) Inventor: Ansah, Frimpong, 81379 München (DE); Walewski, Joachim, 82008 Unterhaching (DE)

(57) **Abstract**

A method for determining an optimized communication path between a first application and a second application of an automation system comprising a plurality of applications is provided. The method comprises:
determining communication relations between the plurality of applications;
determining a topology class for transferring data between the first application and the second application;
mapping the communication relations onto a topology graph;
finding a plurality of communication paths for transferring data between the first and second applications; and
selecting one of the found communication paths as the optimized communication path, the optimized communication path being selected to satisfy a predefined quality of service requirement of the predefined function.

An optimized communication path can be determined, allowing a better resource allocation.

## Description

The present invention relates to a method for determining an optimized communication path between a first and a second application of an automation system. Further, the present invention relates to a device for determining the optimized communication path.

Automation systems can comprise a plurality of applications exchanging data with each other when performing a given function of the automation system. It can be desired to reduce resources required for the data exchanges by optimizing the data exchange between these applications.

It is one objective of the present invention to improve the determination of optimized communication paths between a first and a second or more applications of an automation system.

According to a first aspect, a method for determining an optimized communication path between a first application and a second application of an automation system is provided. The optimized communication path is a path for transferring data when the first and second application jointly execute an automation function. The automation system comprises a plurality of applications including the first application, the second application and a plurality of intermediate applications, the intermediate applications being configured to participate in the execution of the automation function. The method comprises :
determining communication relations between the plurality of applications, the communication relations indicating which application communicate with each other when participating in the execution of the automation function;
determining a topology class for transferring data between the first application and the second application, the topology class being selected from several topology classes including a line topology, a ring topology, and/or a star topology;
mapping the communication relations onto a topology graph based on the determined topology class;
finding a plurality of communication paths for transferring data between the first and second applications using the topology graph; and
selecting one of the found communication paths as the optimized communication path, the optimized communication path being selected to satisfy a predefined quality of service requirement of the automation function.

The optimized path can be determined by accounting for how the plurality of applications interact when executing the automation function. Thereby, resources of the automation system can be suitably allocated. In particular, only the resources that are really necessary for the automation function are reserved for the automation function, while the remaining resources of the automation system can be used for executing other functions. Thus, resource allocation can be optimized and a larger number of different functions can be performed by the automation system at the same time. In particular, the productivity of the automation system can be improved.

The automation system can be a production system in an industrial environment or the like. The automation system may be an automation network. The applications of the automation system can be implemented on devices of the automation system, for example on field devices, internet-of-things devices, robot arms or the like. Alternatively, the applications can be examples of devices. The automation system may, for example, comprise a server transmitting data to one or several clients.

One of the functions performed by the automation system can be an automation function. This automation function can be performed and/or executed jointly by several applications of the automation system. In particular, the automation function is executed by the first, second and more applications of the automation system.

The execution of the automation function may include communication between several automation applications, in particular between the first and the second or more applications. In particular, the term "communication" means a transfer of data. To execute the automation function, data can be transmitted between the first and the second application, which are both part of the plurality of applications of the automation system. In particular, the automation function is jointly executed by the first application, the second application and at least one of the intermediate applications. The intermediate applications can be network nodes. Furthermore, the first and/or second application can be considered as a source application and/or as a target application.

The communication relations can be indicative of which application(s) communicate with which other application(s) when the automation function is executed. In particular, the related communication relations include all possible data exchanges between applications of the automation system when the automation function is executed. The communication relations between applications can be determined based on application relations indicating how the applications are related to each other. Such a relationship between applications can be a client and server relationship, for example.

The topology class can be determined based on how the first and second application communicate with each other when performing the automation function. In particular, the topology class is determined based on a number of required communication segments between the first and second applications and based on a number of participating applications. For example, when the communication relations indicate that two applications (for example the first and the second application) communicate through a single communication segment, the line topology is inferred as a suitable topology class. If the communication relations indicate that two applications (for example the first and the second application) need to communicate through two redundant communication segments, the ring topology is inferred as a suitable topology class. Further, if the communication relations indicate that one application (for example the first application) communicates with several application (for example including the second application or vice-versa), the star topology is determined as a suitable topology class.

Communication relations can be mapped on a topology graph. The topology graph indicates how the applications communicate with each other. In particular, the topology graph is a graphical representation of the communication relations. In the representation of the topology graph, applications communicating with each other can be connected to one another by a line.

The plurality of communication paths for transferring data between the first and second application can be found using the topology graph. In particular, all possible paths for transferring data between the first and second application which correspond to the determined topology class are determined. Each communication path can include several communication segments of the topology graph such as to include several communication relations. The possible communication paths between the first and second application can be determined by use of an algorithm which is described further below.

The predefined quality of service requirement of the automation function can be a predetermined indication on the resources needed for the execution of the automation function, in particular for the data exchange between the first and the second application. The predefined quality of service requirement may be considered as a boundary condition for the selection of the optimized communication path.

In particular, the optimized communication path is the optimal communication path for the exchange of data between the first and the second application under consideration of the quality of service requirement. The quality of service requirement of an automation function can be a measure of the resources that are really needed for said automation function.

According to an embodiment, the method further comprises:
assigning a quality of service information to each of the communication relations indicative of resources provided by the intermediate applications when participating in the execution of the automation function; and
selecting the optimized communication path under consideration of the quality of service information assigned to the communication relations.

In particular, each communication relation has a quality of service assigned thereto, based on which an overall quality of service information can be determined for each of the plurality of communication paths. For example, the overall quality of service information of a communication path is determined or calculated by combining the quality of service information of the individual communication relations forming said communication path.

In some embodiments, the optimized communication path is determined as one having a quality of service information which is higher than all other communication paths. The optimized communication path can also be determined as one having a quality of service information which is higher (or lower) than a predetermined threshold or the like.

The optimized communication path can be selected by comparing the overall quality of service information of each communication path with the quality of service requirement of the automation function.

According to another embodiment, the quality of service requirement and/or the quality of service information includes bandwidth, timeliness, packet loss, latency, capacity, throughput, transmission delay and/or availability and reliability of the optimized communication path and/or of the communication relation.

According to another embodiment,
the line topology is a topology in which the first application and the second application are connected for establishing a single unidirectional or bidirectional communication segment between the first and the second application;
the ring topology is a topology in which the first application and the second application are connected redundantly through two unidirectional or bidirectional communication segments between the two applications;
the star topology is a topology in which the first application is connected to multiple applications including to the second application for establishing multiple unidirectional and/or bidirectional communication segments between the first application and the respective multiple applications.

A communication segment in particular corresponds to a communication route along which data can be sent between applications. In the case of the ring topology, the two applications can be redundantly connected, meaning that data can be exchanged between the two applications through two separate communication routes.

According to a further embodiment, when the ring topology is determined as the topology class for the communication relations, the steps of finding a plurality of communication paths and of selecting the optimized communication path include:
finding a first list of paths for the first communication segment;
selecting a first selected path from the first list of paths that best meets the quality of service requirement;
removing all links from the selected path;
finding a second list of paths for the second communication segment;
selecting a second selected path from the second list of paths that best meets the quality of service requirement; and
assembling the first selected path and the second selected path to form the optimized communication path.

When the ring topology is selected, the optimized communication path may comprise a first and a second optimized communication path. These first and a second optimized communication paths can be respectively determined for the first and the second communication segments linking the first and the second application. In the step of removing all links from the selected path, those links can be temporarily removed to avoid assigning them to both selected paths.

When the star topology is selected, the communication segments can be placed one after another such as to connect the first application to the respective multiple applications. In particular, the communication segments are chosen such as to avoid loops being formed by the communication segments. The optimized communication path may be one for which the assembling of all communication segments complies with the predefined quality of service requirement.

According to a further embodiment, the method further comprises :
detecting whether an intermediate application is added and/or removed from the automation system; and
if it is determined that an intermediate application is added and/or removed from the automation system, repeating the steps of mapping the communication relations onto the topology graph, finding a plurality of communication paths and selecting the optimized communication path in order to determine a new optimized communication path for the changed automation system.

The optimized communication path may be determined dynamically while the applications of the automation system are running. In particular, the optimized communication path is re-determined or updated when the automation system changes by addition and/or removal of an intermediate application, for example when a device comprising an application is added and/or removed from the automation system. The dynamic determination of the optimized communication path enables a dynamic and optimized resource allocation.

In particular, the optimized communication path is determined while the automation system is in operation.

According to a second aspect, a method for jointly executing an automation function by a first and second application of an automation system is provided. The method comprises:
determining an optimized communication path between the first and the second application according to the method according to the first aspect or according to an embodiment of the first aspect; and
transferring data through the optimized communication path when executing the automation function by the first and second application.

The optimized communication path can be established and used to transfer data between the first and the second application. When data is transmitted between the first and the second application, it may be transmitted exclusively along the determined optimized communication path. In particular, the data is transmitted between the first and the second application via at least one of the intermediate applications of the automation system.

According to a third aspect, the invention relates to a computer program product comprising a program code for executing the method according to the first or second aspect or according to an embodiment thereof when run on at least one computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

According to a fourth aspect, a device for determining an optimized communication path between a first application and a second application of an automation system is provided. The optimized communication path is a path for transferring data when the first and second application jointly execute an automation function. The automation system comprises a plurality of applications including the first application, the second application and a plurality of intermediate application, the intermediate applications being configured to participate in the execution of the automation function. The device comprises :
a relation determination unit for determining communication relations between the plurality of applications, the communication relations indicating which applications communicate with each other when participating in the execution of the automation function;
a topology determination unit for determining a topology class for transferring data between the first application and the second application, the topology class being selected from several topology classes including a line topology, a ring topology and/or a star topology;
a mapping unit for mapping the communication relations onto a topology graph based on the determined topology class;
a path-finding unit for finding a plurality of communication paths for transferring data between the first and second application using the topology graph; and
a selection unit for selecting one of the found communication paths as the optimized communication path, the optimized communication path being selected to satisfy a predefined quality of service requirement of the automation function.

The respective unit, in particular the relation determination unit, the topology determination unit, the mapping unit, the path-finding unit, and the selection unit, may be implemented in hardware and/or in software. If said unit is implemented in hardware, it may be embodied as a device, e.g. as a computer or as a processor or as a part of a system, e.g. a computer system. If said unit is implemented in software it may be embodied as a computer program product, as a function, as a routine, as a program code or as an executable object.

In an embodiment, the device according to the fourth aspect is configured to perform the method according to the first or second aspect, or according to an embodiment thereof.

The embodiments and features described with reference to the methods according to the first and second aspects apply mutatis mutandis to the device according to the fourth aspect.

Further possible implementations or alternative solutions of the invention also encompass combinations-that are not explicitly mentioned herein-of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows an automation system according to a first embodiment;
Fig. 2 shows an example of a line topology;
Fig. 3 shows an example of a ring topology;
Fig. 4 shows an example of a star topology;
Fig. 5 shows an example of a topology graph;
Fig. 6 shows an example of a communication path;
Fig. 7 shows an example of a communication path;
Fig. 8 shows a method for determining an optimized communication path according to a first embodiment;
Fig. 9 shows an automation system according to a second embodiment;
Fig. 10 shows a device for determining an optimized communication path;
Fig. 11 shows a method for determining an optimized communication path according to a second embodiment;
Fig. 12 shows a method for determining an optimized communication path according to a third embodiment.

In the Figures, like reference numerals designate like or functionally equivalent elements, unless otherwise indicated.

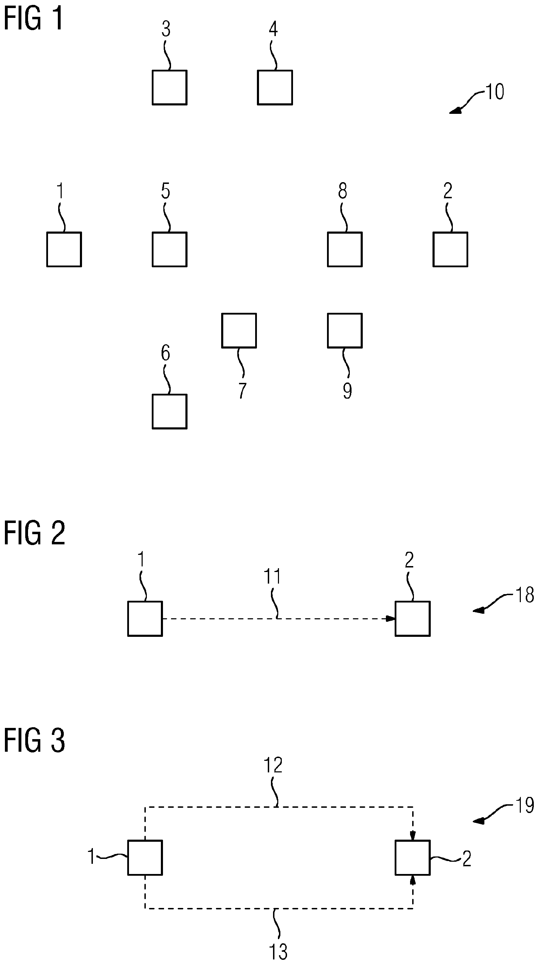

Fig. 1 shows an automation system 10 according to a first embodiment. The automation system 10 comprises a plurality of applications 1 - 9 located on corresponding devices. The application 1 forms a first application, the application 2 forms a second application and the applications 3 - 9 form intermediate applications.

The automation system 10 is a production system in an industrial environment. The application 1 is located on a server and the application 2 is located on a client. The intermediate application 3 - 9 are network nodes. In some embodiments, the intermediate applications 3 - 9 are also located on clients.

The first and second applications 1, 2 jointly execute the automation function. To this end, the applications 1, 2 interact with each other by exchanging data. The exchange of data between the first and second applications 1, 2 is facilitated by the intermediate applications 3 - 9.

When the automation system 10 is running, it is important to plan which resources are made available by the respective applications 1 - 9 to improve the amount of data that can be transferred between the applications 1 - 9 and increase the productivity of the automation system 10. The resources can be expressed as a quality of service information, which for example include an end-to-end delay, a jitter and an availability.

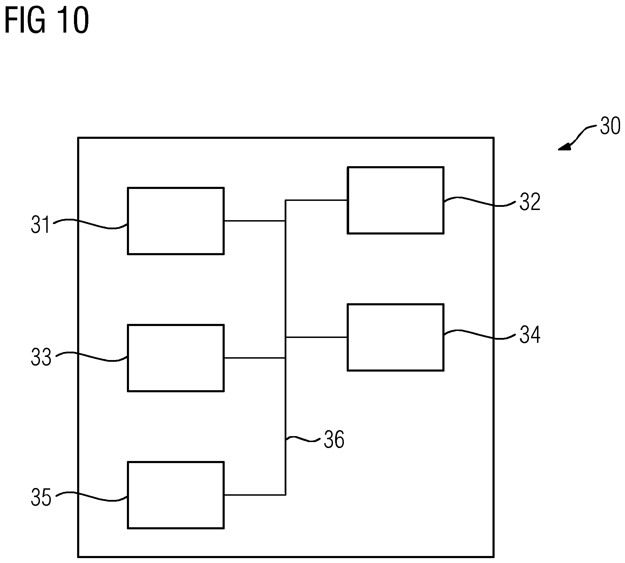

To plan which resources are made available by the applications 1 - 9 and when, an optimized communication path can be determined between the first application 1 and the application 2 using a device 30 for determining an optimized communication path. An example of such a device 30 is shown in Fig. 10 and includes a relation determination unit 31, a topology determination unit 32, a mapping unit 33, a path finding unit 34 and a selection unit 35, which are connected to one another through an internal bus 36.

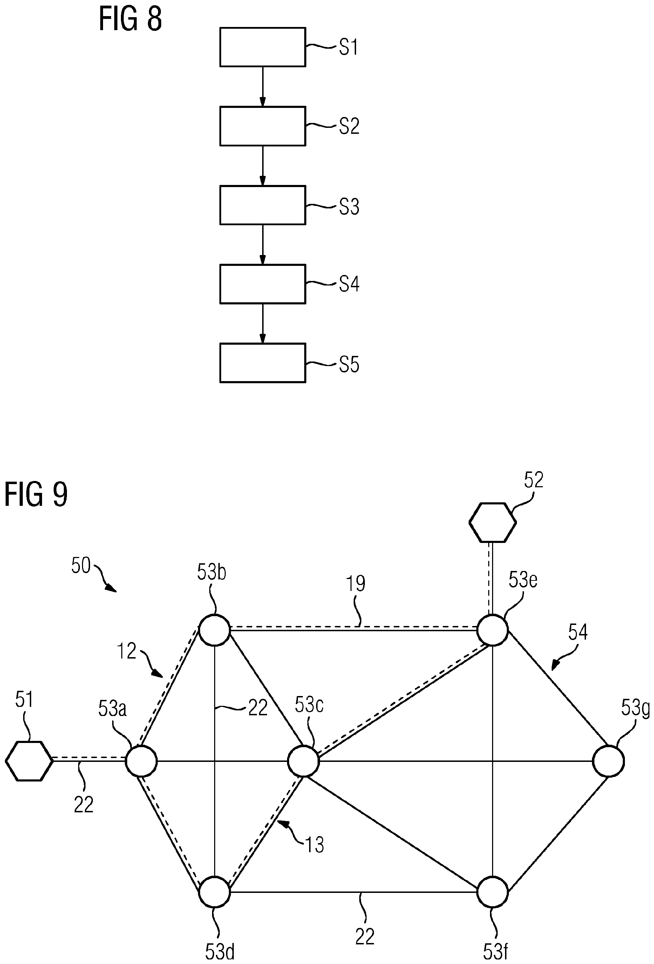

The device 30 of Fig. 10 can be used to perform a method for determining an optimized communication path. A first embodiment of such a method is shown in Fig. 8. In the following, this method will be described with reference to the Fig. 1 - 6.

In a step S1 of Fig. 8, communication relations 22 are determined between the plurality of applications 1 - 9 by the relation determination unit 31. The communication relations 22 are indicative of how the applications 1 - 9 can communicate with each other. In detail, the communication relations 22 indicate whether an application 1 - 9 can communicate with another application 1 - 9 and how this communication can occur, namely based on which quality of service information and based on information such as directionality, OSI (Open Systems Interconnection) level of operation and the like. In the example shown in Fig. 3, the communication relations 22 are graphically indicated by lines joining applications 1 - 9 which can communicate with one another. In the example of Fig. 3, only four of the lines representing the communication relations 22 are provided with reference signs, but it is understood that the remaining lines between applications 1 - 9 also indicate communication relations 22.

In a step S2 of the method of Fig. 8, the topology determination unit 32 determines a topology class for the communication between the first application 1 and the second application 2. In detail, depending on the purpose of the communication between the first application 1 and the second application 2, the topology determination unit 32 chooses between a line topology 18, a ring topology 19 and a star topology 20.

Fig. 2 shows an example of the line topology 18. In the line topology 18, a single communication segment 11 is used to exchange data between the first application 1 and the second application 2. The data is exchanged unidirectionally through the communication segment 11 in the present case, as shown by the arrow in Fig. 2. However, a bidirectional exchange of data is also possible.

Fig. 3 shows an example of the ring topology 19. In the ring topology 19, two communication segments 12, 13 are used to exchange data between the first application 1 and the second application 2. The data is exchanged unidirectionally from the first application 1 to the second application 2 through each of the communication segments 12, 13, such that the communication segments 12, 13 form redundant communication segments 12, 13. However, a bidirectional data exchange is also possible in the ring topology 19 case.

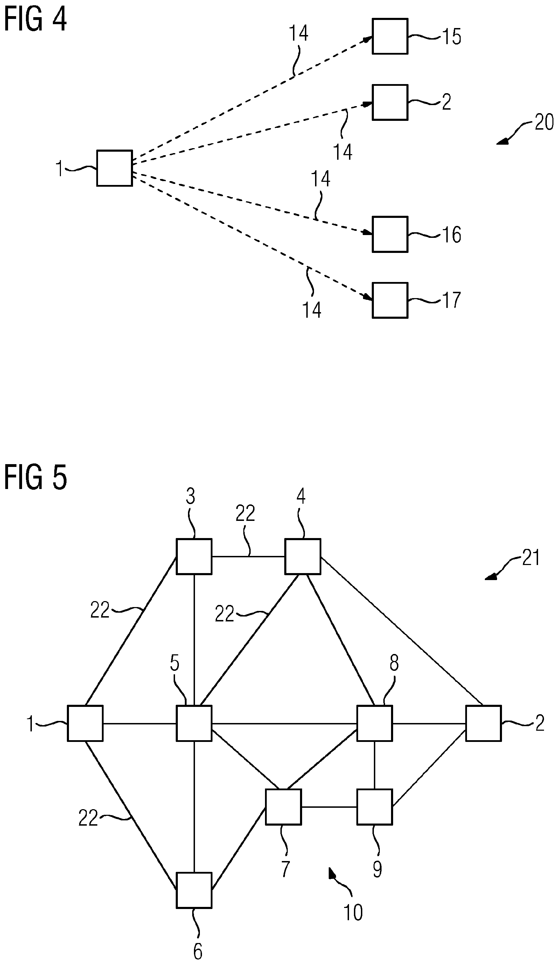

Fig. 4 shows an example of the star topology 20. In the star topology 20, a single communication segment 14 is used to exchange data between the first application 1 and a plurality of applications 2, 15, 16, 17 including the second application 2. The data is exchanged unidirectionally through each communication segment 14 in the present case, as shown by the arrows in Fig. 4. However, a bidirectional exchange of data is also possible.

In the present case, the automation system 10 only requires data to be transferred from the first application 1 to the second application 2 in a single communication segment 11 as part of the execution of the automation function. Thus, the topology determination unit 32 selects the line topology 18 as the topology class for the communication between the first application 1 and the second application 2.

Once the topology class is selected, the mapping unit 33 maps the communication relations 22 onto a topology graph 21 in a step S3 of Fig. 8. An example of a topology graph 21 is shown in Fig. 5. In detail, the topology graph 21 is a graphical representation of the automation system 10, in which the communication relations 22 are indicated by lines (communication segments) connecting the applications 1 - 9, as already described above. The mapping unit 33 stores the topology graph 21. In some embodiments, the mapping unit 33 also displays the topology graph 21 on a display for visualization by a user, for example.

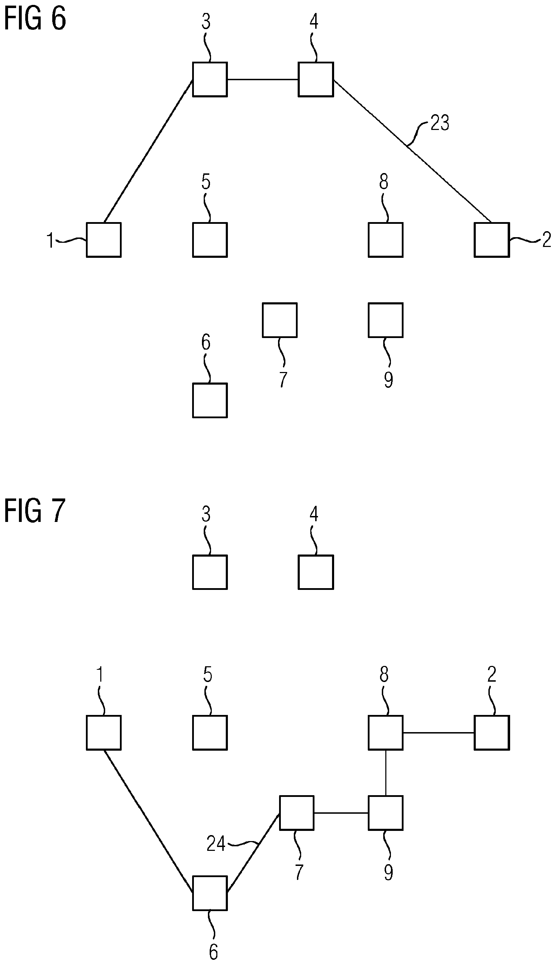

In a step S4 (Fig. 8), the path finding unit 34 finds a plurality of communication paths 23, 24. Fig. 6 and 7 show examples of such communication paths 23, 24. The communication paths 23, 24 are made of several communication segments representing a communication relation 22. The communication path 23 is made of three communication segments, which respectively link the applications 1 and 3, 3 and 4, and 4 and 2. The communication path 24 is made of five communication segments, which respectively link the applications 1 and 6, 6 and 7, 7 and 9, 9 and 8, and 8 and 2.

Beyond the communication paths 23, 24, the path finding unit 34 determines other communication paths linking the first application 1 and the second application 2 through one or several intermediate applications 2 - 9. For example, the path finding unit 34 can determine all the communication paths linking the first application 1 and the second application 2 with less than four intermediate applications 3- 9 therebetween.

Once the communication paths 23, 24 are determined, the selection unit 35 selects one of the communication paths 23, 24 as an optimized communication path. The optimized communication path is selected such that it meets, among others, a predefined quality of service requirement of the automation function. The predefined quality of service requirement is an indication on, among others, the end-to-end delay, the jitter and the availability of the data transmission from the first application 1 to the second application 2.

In order to select the optimized communication path 23, 24, the selection unit 35 calculates an overall quality of service information for each communication path 23, 24 based on the quality of service information associated with each communication relation 22. Thereby, a quality of service information is obtained for each communication path 23, 24 and can be compared to the pre-stored predefined quality of service requirement of the automation function.

The selection unit 35 selects the communication path 23, 24, having an overall quality of service information that best matches the predefined quality of service requirement of the automation function as the optimized communication path. For example, if the end-to-end delay of the communication path 24 is lower than that required by the predefined quality of service requirement of the communication relation, the selection unit 35 discards the communication path 24.

In the present example, the selection unit 35 determines that the communication path 23 satisfies all the predefined quality of service requirements of the automation function. Accordingly, the selection unit 35 selects the communication path 23 as the optimized communication path for the transmitting data from the first application 1 to the second application 2.

Once the optimized communication path has been determined, the resources necessary for this optimized communication path can be reserved. When the automation function is executed, data is transferred through the determined optimized communication path 23, 24 between the first application 1 and the second application 2.

Fig. 9 shows an automation system 50 according to a second embodiment. The automation system 50 differs from the automation system 10 according to the first embodiment in that it comprises a different number of applications 51, 52, 53a - 53g arranged in a different manner. In detail, the automation system 50 can be represented by the topology graph 54, with the application 51 forming the first application, the application 52 forming the second application and the applications 53a - 53g forming intermediate applications.

In the automation system 50, the first application 51 and the second application 52 jointly execute an automation function in which they exchange data in both directions using a ring topology 19, as represented by the dashed line in Fig. 9. The ring topology 19 has a first communication segment 12 and a second communication segment 13. The first communication segment 12 joins the applications 53a, 53b and 53e, while the second communication segment 13 joins the applications 53a, 53c and 53e.

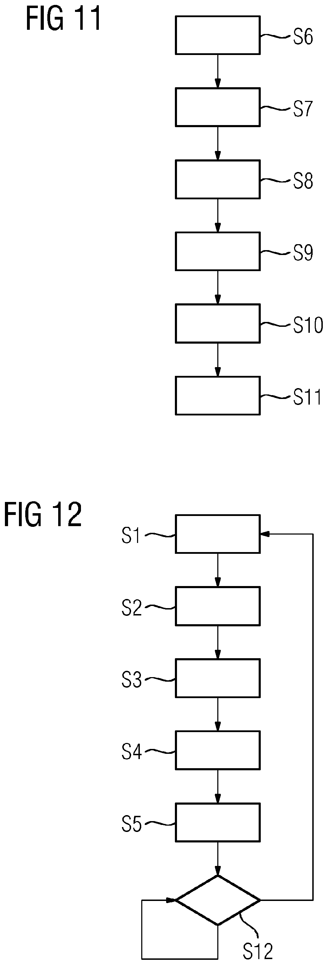

The optimized communication path of the automation system 50 can be determined similarly to the one of the automation system 10 using the device 30. Beyond that, the steps S4 and S5 of the method according to the first embodiment described above (Fig. 8) can include the steps S6 - S11 shown in Fig. 11. In detail, Fig. 11 shows a method for determining an optimized communication path according to a second embodiment.

In the step S6, the path finding unit 34 determines a first list of communication paths for the first communication segment 12. This first list includes a plurality of communication paths for transferring data between the first application 51 and the second application 52. The step S6 is similar to the step S4 described above.

In the step S7, the selecting unit 35 selects one of the paths from the first list as the first selected path. The first selected path is selected based on the quality of service requirement of the automation function. The step S7 is performed similarly to the step S5 described above.

Once the first selected path has been found, the communication segments or links forming this first selected path are deactivated or removed from the topology graph 21 for avoiding using these segments or links twice.

The steps S6 and S7 are repeated for the second communication segment 13 with the remaining communication segments or links in the steps S8 and S9. Thereby, a second selected path is determined.

In a step S10, the first and the second selected paths are assembled to form the optimized communication path.

Fig. 12 shows a method for determining an optimized communication path according to a third embodiment, which can be used to determine an optimized communication path. Beyond the steps S1 - S5 of the method according to the first embodiment, the method according to the third embodiment further comprises a step S12 in which it is determined whether an intermediate application 3 - 9 has been added and/or removed from the automation system 10, 50. The step S12 is repeated as long as no intermediate application 3 - 9 is added and/or removed from the automation system 10, 50. When it is determined in step S12 that an intermediate application 3 - 9 has been added and/or removed from the automation system 10, 50, the steps S1 - S5 are repeated such as to determine a new optimized communication path.

Although the present invention has been described in accordance with preferred embodiments, it is obvious for the person skilled in the art that modifications are possible in all embodiments. For example, the determined topology class can be the star topology.

## Claims

1. A method for determining optimized communication path between a first application (1, 51) and a second application (2, 52) of an automation system (10, 50), the optimized communication path being a path for transferring data when the first application (1, 51) and the second application (2, 52) jointly execute an automation function, and the automation system (10, 50) comprising a plurality of applications (1 - 9, 51, 52, 53a
- 53g) including the first application (1, 51), the second application (2, 52) and a plurality of intermediate applications (3 - 9, 53a - 53g), the intermediate applications (3 - 9, 53a
- 53g) being configured to participate in the execution of the automation function, the method comprising:
determining (S1) communication relations (22) between the plurality of applications (1 - 9, 51, 52, 53a - 53g), the communication relations (22) indicating which applications (1 - 9, 51, 52, 53a - 53g) communicate with each other when participating in the execution of the automation function;
determining (S2) a topology class for transferring data between the first application (1, 51) and the second application (2, 52), the topology class being selected from several topologies including a line topology (18), a ring topology (19) and/or a star topology (20);
mapping (S3) the communication relations (22) onto a topology graph (21) based on the determined topology class;
finding (S4) a plurality of communication paths (23, 24) for transferring data between the first application (1, 51) and the second application (2, 52) using the topology graph (21); and
selecting (S5) one of the found communication paths (23, 24) as the optimized communication path, the optimized communication path being selected to satisfy a predefined quality of service requirement of the automation function.

2. The method according to claim 1, comprising:
assigning a quality of service information to each of the communication relations (22) indicative of resources provided by the intermediate applications (3 - 9, 53a - 53g) when participating in the execution of the automation function; and
selecting the optimized communication path under consideration of the quality of service information assigned to the communication relations (22).

3. The method according to claim 1 or 2,
wherein the quality of service requirement and/or the quality of service information includes a bandwidth, a packet loss, a timeliness, a latency, a bit rate, a throughput, a transmission delay, a reliability and/or an availability of the optimized communication path and/or of the communication relation (22) .

4. The method according to any one of claims 1 - 3,
wherein:
the line topology (18) is a topology in which the first application (1, 51) and the second application (2, 52) are connected for establishing a single unidirectional or bidirectional communication segment (11) between the first application (1, 51) and the second application (2, 52);
the ring topology (19) is a topology in which the first application (1, 51) and the second application (2, 52) are connected redundantly through two unidirectional or bidirectional communication segments (12, 13) between the two applications (1, 2, 51, 52); and
the star topology (20) is a topology in which the first application (1, 51) is connected to multiple of the applications (2, 3 - 9, 52, 53a - 53g) including to the second application (2, 52) for establishing multiple unidirectional and/or bidirectional communication segments (14) between the first application (1, 51) and the respective multiple applications (2, 3 - 9, 52, 53a - 53g).

5. The method according to any one of claims 1 - 4,
wherein, when the ring topology (19) is determined as the topology class, the steps of finding (S4) a plurality of communication paths (23, 24) and of selecting (S5) the optimized communication path include:
finding (S6) a first list of paths for the first communication segment (12);
selecting (S7) a first selected path from the first list of paths that best meets the quality of service requirement;
removing (S8) all links from the selected path;
finding (S9) a second list of paths for the second communication segment (13);
selecting (S10) a second selected path from the second list of paths that best meets the quality of service requirement; and
assembling (S11) the first selected path and the second selected path to form the optimized communication path.

6. The method according to any one of claims 1 - 5, further comprising:
detecting whether an intermediate application (3 - 9, 53a - 53g) is added and/or removed from the automation system (10, 50); and
if it is determined that an intermediate application (3 - 9, 53a - 53g) is added and/or removed from the automation system (10, 50), repeating the steps of mapping (S3) the communication relations (22) onto the topology graph (21), finding a plurality of communication paths (23, 24) and selecting the optimized communication path in order to determine a new optimized communication path for the changed automation system (10, 50).

7. A method for jointly executing an automation function by a first application (1, 51) and second application (2, 52) of an automation system (10, 50), the method comprising:
determining an optimized communication path between the first application (1, 51) and the second application (2, 52) according to the method of any one of claims 1 to 6; and
transferring (S12) data through the optimized communication path when executing the automation function by the first application (1, 51) and second application (2, 52).

8. A computer program product comprising a program code for executing the method according to any one of claims 1 - 7 when run on at least one computer.

9. A device (30) for determining an optimized communication path between a first application (1, 51) and a second application (2, 52) of an automation system (10, 50), the optimized communication path being a path for transferring data when the first application (1, 51) and the second application (2, 52) jointly execute an automation function, and the automation system (10, 50) comprising a plurality of applications (1 - 9, 51, 52, 53a - 53g) including the first application (1, 51), the second application (2, 52) and a plurality of intermediate applications (3 - 9, 53a - 53g), the intermediate applications (3 - 9, 53a - 53g) being configured to participate in the execution of the automation function, the device (30) comprising:
a relation determination unit (31) for determining communication relations (22) between the plurality of applications (1 - 9, 51, 52, 53a - 53g), the communication relations (22) indicating which applications (1 - 9, 51, 52, 53a - 53g) communicate with each other when participating in the execution of the automation function;
a topology determination unit (32) for determining a topology class for transferring data between the first application (1, 51) and the second application (2, 52), the topology class being selected from several topology classes including a line topology (18), a ring topology (19) and/or a star topology (20) ;
a mapping unit (33) for mapping the communication relations (22) onto a topology graph (21) based on the determined topology class;
a path finding unit (34) for finding a plurality of communication paths (23, 24) for transferring data between the first application (1, 51) and the second application (2, 52) using the topology graph (21); and
a selection unit (35) for selecting one of the found communication paths (23, 24) as the optimized communication path, the optimized communication path being selected to satisfy a predefined quality of service requirement of the automation function.

10. The device according to claim 9, which is configured to perform the method according to any one of claims 1 to 7.
